# EUROPEAN PATENT APPLICATION

(11) **EP 4 796 686 A1**
(43) Date of publication of application: **26.08.2026**
(21) Application number: 25158783.8
(22) Date of filing: 19.02.2025
(51) Int. Cl.: D04H 1/4209, B09B 3/35, D04H 1/4218, D04H 1/4274, D04H 1/4382, D04H 1/46, D04H 1/732

(54) **METHOD FOR PRODUCING A MINERAL WOOL PRODUCT**

(71) Applicant: Saint-Gobain Ecophon AB, 265 03 Hyllinge (SE)
(72) Inventor: HOOSHMAND, Saleh, 254 63 Ödåkra (SE)
(74) Representative: AWA Sweden AB

(57) **Abstract**

Method for producing a mineral wool product, said method comprising: fragmentising a recycled mineral wool material for obtaining a first fibre component in the form of fragmentised mineral wool material, mixing the first fibre component with a second fibre component for obtaining a fibre mixture, wherein the second fibre component has an average fibre length which is greater than an average fibre length of the first fibre component, subjecting the fibre mixture to needle punching for mechanically binding the first fibre component and the second fibre component, and subjecting the fibre mixture to a compression operation.

## Description

### Field of the invention

The present invention is related to a method for producing a mineral wool product.

### Background art

Elements comprising mineral wool may be used for a variety of purposes. For instance, the elements comprising mineral wool such as glass or stone wool may constitute acoustical panel elements and may be formed as horizontally arranged ceiling tiles, vertically arranges baffle elements, wall mounted elements or free-standing screens. The elements may alternatively be formed as thermal insulation elements.

The use of elements comprising mineral wool results in the generation of considerable amounts of waste. The waste may be generated during manufacture of the elements comprising mineral wool and may comprise rejected elements or removed sections during shaping of the elements.

Waste may also be generated during installation of a system of elements comprising mineral wool. The waste at this stage may comprise sections removed from elements during trimming or elements remaining after completed installation.

Waste may also be generated after end of life when the system of elements comprising mineral wool is demounted.

Conventionally, waste in the form of elements comprising mineral wool generated during manufacturing, installation or demounting after end of life has been difficult to recycle in an efficient manner. Most commonly, the waste goes to landfills.

Due to the low bulk density of mineral wool, such recycling causes high management costs and significant environmental impacts. Besides, some of the mineral wool contains a phenolic binder, causing a risk for the leaching water from landfills to contain harmful substances.

Some efforts have been made for alternative ways of recycling mineral wool (such as supplementary cementitious materials (SCM's) or as geopolymer precursors). However, the current utilization amount is still rather limited.

### Summary of the invention

The object of the present invention is to provide an improved method for recycling mineral wool material. A further object is to provide an improved method for producing a mineral wool product from recycled mineral wool material. To achieve at least one of the above objects and also other objects that will be evident from the following description, a method having the features defined in claim 1 is provided according to the present invention. Preferred embodiments will be evident from the dependent claims.

More specifically, there is provided according to a first aspect of the present invention a method for producing a mineral wool product comprising: fragmentising a recycled mineral wool material for obtaining a first fibre component in the form of fragmentised mineral wool material, mixing the first fibre component with a second fibre component for obtaining a fibre mixture, wherein the second fibre component has an average fibre length which is greater than an average fibre length of the first fibre component, subjecting the fibre mixture to needle punching for mechanically binding the first fibre component and the second fibre component, and subjecting the fibre mixture to a compression operation.

Hereby an improved method for recycling mineral wool is provided enabling reusage of mineral wool material in new products.

Fragmentizing of the mineral wool material may be carried out at a high production rate by means of for instance a shredding device, a cutting device, a hammer mill device or the like. It is also conceivable to use a combination of devices for the fragmentizing of the mineral wool material, such as fragmentizing by means of a shredding device and followed by fragmentizing by means of a hammer mill device.

By adding the second fibre component and mixing the first and second fibre component, a mixture comprising a variety of fibre length is obtained.

When subjecting the fibre mixture to needle punching, the second fibre component is intertwined with the first fibre component in the mixture and the mixture is mechanically bound together.

Compression is made to obtain the desires thickness and/or size of the wool product.

The mineral wool product may be formed and shaped into different end products. I some examples the method may comprise converting the needle punched and compressed fibre mixture into a panel shaped mineral wool product. The panel shaped mineral wool product may for example be a ceiling panel or an acoustical panel or any other panel made of mineral wool.

In some examples, the second fibre component may have an average fibre flexibility which is greater than an average fibre flexibility of the first fibre component. A greater flexibility of the second fibre component may improve the binding with the first fibre component as the flexibility of the second fibre may allow for improved binding. Flexibility in this context refers to the ability of the fibres to bend and deform without breaking.

In some examples the step of mixing may comprise adding a third fibre component, and mixing the first fibre component and the second fibre component with the third fibre component. The third fibre component may provide the mixture and the final product with improved mechanical strength. The third fibre component may be added for functional purposes such as to reduce or remove smell, volatile organic compounds (VOC) or formaldehyde. Some examples of the third fibre component are bicomponent fibres (bico-fibres) and active carbon fibres.

In some examples the second fibre component may be at least one of: sheep wool, or metal fibre, para-aramid fibre, novoloid fibres, metallic fibre, polyacrylate or virgin mineral wool. The polyacrylate may be IMAT'Fire (Trademark), and is a non-flammable fibre, and may provide improved thermal performance. The novoloid fibre may be Kynol (Trademark), also known as an activated carbon fibre. Kynol may provide the benefit of reducing adsorption of VOC and/or formaldehyde.

The second fibre component may be made of or comprise a fire-retardant fibre. Within the context of the present disclosure, a fire-retardant fibre is to be understood as a fibre which is resistant to igniting. Additionally, a fire-retardant fibre may be non-combustible. Examples of non-combustible fibres include mineral fibres and metallic fibres. It is further to be understood that a fibre may be fire-retardant, that is resistant to igniting, due to intrinsic properties of the constituent parts of the fibre, and/or due to chemical and/or physical treatment of the fibre.

In some examples the recycled mineral wool may be obtained in the form of waste generated during manufacturing, installation and/or demounting after end of life of elements comprising mineral wool. Hereby recycling is enabled of a type of waste which conventionally is difficult to recycle.

In some examples the recycled mineral wool may be fragmentised to fragments of non-uniform shape and/or having an average size in the range of 10x10x10 mm to 50x50x50 mm.

In some examples the fibres of the second component having an average length of 12-30 mm.

In some examples the needle punching may be performed in a range of 50-300 needle punches per square cm.

In some examples the step of subjecting the fibre mixture to a compression operation may be performed such that the density of the mineral wool product is in the range of 100-300 kg/m³.

In some examples the step of subjecting the fibre mixture to a compression operation is performed such that the thickness of the mineral wool product is in the range of 20-50 mm.

As discussed above the mineral wool product may be formed and shaped into different end products. One such example is the product may be a panel. he mineral wool product may be treated when performing steps to convert the mineral wool product into the panel.

The method may in such examples further comprise a step of surface milling or grinding of the mineral wool product.

In some examples the method further comprises edge milling of the mineral wool product. In some examples, the fibre mixture is configured such that the mineral wool product obtains basis weight of 0,1 to 6,0 kg/m² for a calorific value per mass of 0 to 48 MJ/kg and has a total calorific value PCS ≤ 3,0 MJ/kg.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a flowchart showing different steps of a method for producing a mineral wool product.
Fig. 2a-2e is a view schematically illustrating different steps in an embodiment of a method for producing a mineral wool product.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

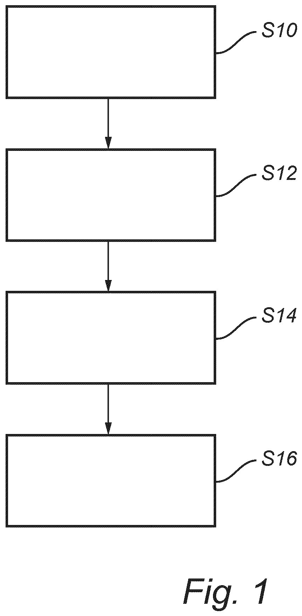

Fig. 1, to which now reference is made, shows a flowchart of an embodiment according to the present invention of a method for producing a mineral wool product.

The mineral wool material used for producing the mineral wool product is recycled mineral wool. The mineral wool may be obtained in the form of waste generated during manufacturing, installation/or demounting after end of life of an element comprising mineral wool. Such elements may for example be acoustical ceiling tiles comprising mineral wool, or ceiling tiles comprising mineral wool. The mineral wool material may be glass wool or stone wool.

The method comprises the following steps:
(S10) fragmentising a recycled mineral wool material for obtaining a first fibre component in the form of fragmentised mineral wool material,
(S12) mixing the first fibre component with a second fibre component for obtaining a fibre mixture, wherein the second fibre component has an average fibre length which is greater than an average fibre length of the first fibre component, the second fibre component consisting of fire-retardant fibres,
(S14) subjecting the fibre mixture to needle punching for mechanically binding the first fibre component and the second fibre component, and
(S16) subjecting the fibre mixture to a compression operation.

In step (S10) the mineral wool is shredded or fragmentised into fragments or pieces for obtaining a first fibre component in the form of fragmentised mineral wool material.

When the mineral wool material is shredded or fragmentised, the mineral wool material may be converted by shredding, cutting or the like into fragments or pieces of non-uniform size and shape.

The fragments may have an average piece size in the range of 10x10x10 mm to 50x50x50 mm.

Step (S10) may be performed by means of a shredding device, a cutting device or a hammer mill device. The shredding device, the cutting device or the hammer mill device may be configured for handling mineral wool material provided in the form of panels or tiles.

The first fibre component may preferably have fibres having a length between 1 to 10 mm. However, the average length of the fibres may be above 10 mm.

The step (S12) is carried out by mixing the first fibre component with a second fibre component to obtain a fibre mixture. The mixing may be performed by an airlaying method known in the art for arranging fibres.

The second fibre component has an average fibre length that is greater than an average fibre length of the first fibre component. The average length of the second fibre component may preferably be in the range anywhere between 12-30 mm.

The second fibre component may for example be a virgin mineral wool, a sheep wool, a meta- or para-aramid fibre, a novoloid fibre, e.g. Kynol (Trademark), a metallic fibre such as cupper, or a polyacrylate fibre, e.g. IMAT'Fire (Trademark). In some examples where the second fibre component is a virgin mineral wool, the second component may comprise a binder. In some examples where the second fibre component is a virgin mineral wool, the second component may not comprise a binder. The second fibre component may in some examples be a mixture of two or more different fibres. The second fibre component has a characteristic of comprising fire-retardant fibres. Thereby providing the fibre mixture with fire-retardant properties.

The second fibre component may have a fibre flexibility that is greater than the fibre flexibility of the first fibre component. The flexibility may be considered as a plastic flexibility, meaning the ability for the fibre to deform without breaking. The flexibility may be an elastic flexibility.

Optionally, the step (S12) may comprise adding a third fibre component to the mixture. The third fibre component may be a bicomponent fibre. Thus, adding a third fibre component to mix with the first and second fibre components. The bicomponent fibre provides improved sturdiness to the mineral wool product. In examples where the third fibre component is a bicomponent fibre, the bicomponent fibre may be between 0-10% of the weight of the mixture, such as between 0-2% of the weight of the mixture, or 5-10% of the weight of the mixture. In some examples, the third fibre component has an average length below 15 mm, preferably below 12 mm. In some examples it is preferred that the average fibre length of the third component is above 30 mm to achieve improved mineral wool material when using a needle punch technique. In some examples the third fibre component may have an average length between 30-60 mm.

In step (S14) the first fibre component is mechanically bound together with the second fibre component by needle punching the fibre mixture.

Optionally, any fibre mixture which has been subjected to needle punching may be cured.

The greater length of the second fibre component improves the binding capacity as the longer fibres allow for more entanglement when intertwining with the first fibre component. The fibres of the second fibre component are punched with the first fibre component such that the fibres mechanically interlock. In examples comprising the third fibre component, the third fibre component is also bound together with the first and second fibre component during the needle punching.

The flexibility of the second fibre component affects the needle punching and how well the punching will bind together the first and second fibre component. It is thus beneficial that the second component has a degree of flexibility such that the fibres are not broken during the step of needle punching. Preferably the second fibre component is flexibly bendable to not break when subjected to needle punching.

However, it is to be noted that the fibre length of the second fibre component may provide challenges to the mixing so the ratio between the lengths should not be too great. The length needed in order to provide a mixture without too many challenges is understood by the skilled person. The punch density and needle penetration depth are set to obtain a desired wool product based on predefined criteria. The punch density affects the density, stiffness, and flexibility of the product. In one example the needle board density may be 3 000 needles per meter. The machine speed may be 1 000 strokes per minute. The web speed may be 5 meters per minute. However, the skilled person has knowledge about how to set the parameters in order to obtain the desired product based on density, stiffness, and flexibility.

In some examples the needle punching may be performed in a range of 50-300 needle punches per square cm.

An airlaying method may be used to arrange the mixture of the first and second fibre component into a web on a conveyor towards a needle puncing machine.

During the needle punching the fibre mixture may pass through two plates, a stripper plate, and a bed/stitching plate. The bed/stripper plate and the stitching plate are arranged to allow needles to pass through the fibre mixture.

In step (S16) the compression of the fibre mixture for forming a mineral wool product. The mixture may be compressed to form a tile. The mixture may be compressed such that the mineral wool product obtains a thickness in the range of 20-50 mm.

The mixture may be compressed such that the mineral wool product obtains a density in the range of 100-300 kg/m³.

In some examples the method may comprise a step of heating in examples wherein a thermoplastic bicomponent is used as a third fibre component. Hereby, the bonding of the bicomponent fibres may provide added rigidity to the mineral wool product.

The mineral wool product may be converted into a panel shaped mineral wool product. Such a panel may be an acoustical panel.

In some examples the method may comprise a step of surface milling or grinding.

In some examples the method may comprise edge milling of the mineral wool product.

Thereby the mineral wool product may be formed into for example a tile or absorber.

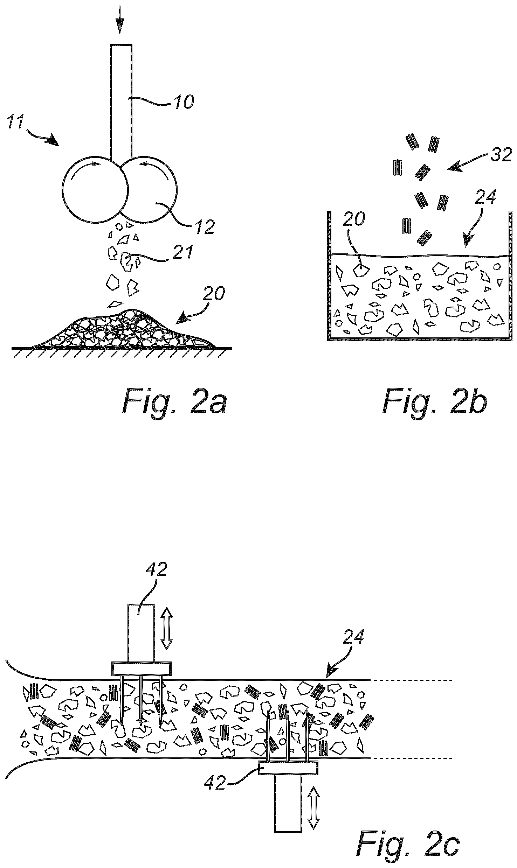

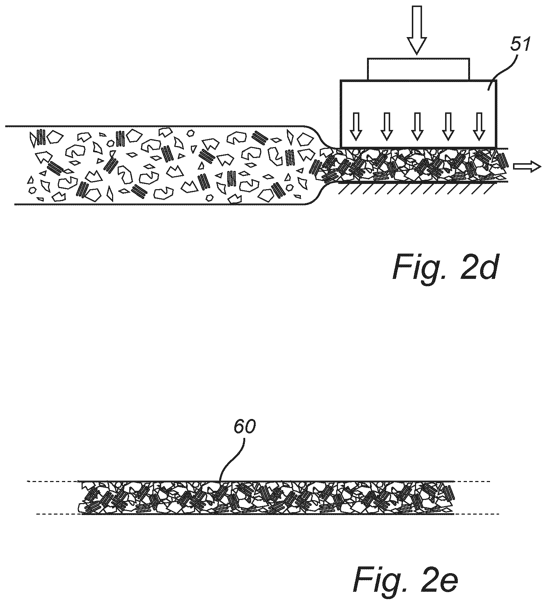

In Fig. 2, to which reference now is made, steps a)-e) of an embodiment of a method according to the invention is schematically illustrated.

In step a), mineral wool material 10 provided in the form of a tile is fragmentised for obtaining a first fibre component 20 by means of a shredding device 11 comprising two opposed sets of rotatable cutting blades 12. The mineral wool material 10 is inserted between the two opposed sets of rotatable cutting blades 12 which during operation engages the mineral wool material 10 for fragmentizing thereof. The shredding device 11 is configured for producing fragments 21 having a non-uniform size and shape, and the average size of the fragments 21 may be in the range of 10x10x10 - 50x50x50 mm.

In step b), the first fibre component 20 is mixed together with a second fibre component 32, thereby forming a mixture. The second fibre component 32 comprises fibres having an average length which is greater than the average length of the fibres of the first component 20.

In steps c), the mixture 24 comprising the first fibre component 20, and the second fibre component 32, is subjected to a needle punching unit 42 in which the mixture is subjected to needle punching. The needles are punched in and out from the mixture 24. When the needles are punched into the mixture 24, the fibres form the second fibre component 32, are interlocked/intertwined with the first fibre component 20. Thereby the two fibre components are mechanically bound together when subjected to the needle punching.

In step d) the mixture 24 which is now needle punched, is subjected to a compression unit 51, whereby the mixture is compressed to a desired thickness and a desired density. For example, the thickness may be between 20-50 mm. However, it is to be noted that the thickness may be lower than 20 mm. The thickness may be greater than 50 mm.

The mixture may be compressed such that the density of the mineral wool product is preferably in the range of 100-300 kg/m³. The density may be lower than 100 kg/m³. The density may be greater than 300 kg/m³.

In step e) there is shown a mineral wool product 60 obtained from the method.

The mineral wool product 60 may be cut and sized as desired.

In some examples, the steps of the method may be performed in a linear production unit wherein all steps are performed one after another along a defined path.

The fibre components of the mixture 24 may be chosen such that the resulting mineral wool product achieves fire class B, or preferably A2, according to the standard EN 13501-1. For instance, the mixture may be configured such that the mineral wool product has basis weight of 0,1 to 6,0 kg/m² for a calorific value per mass of 0 to 48 MJ/kg and that the wool product has a total calorific value PCS ≤ 3,0 MJ/kg.

Any one of the disclosed fibre components may be obtained by a carding process. In the carding process the fibres are formed into a single layer fibre web.

The first fibre component, and/or the second fibre component, and/or the third fibre component may be obtained through a carding process.

In examples where the third component is obtained by carding, fibres with a higher average length can be added to the mixture, which many provide improved binding to the mineral wool product.

When using for example bicomponent fibres that are obtained from carding, it has been realized that an average length of 30-60 mm of the bicomponent fibres has provided improved bonding of the mineral wool product. In such example, the bicomponent fibres web may be placed on one side of the air laid web of the mixture of the first and second fibre component. In such example the two layers should be needle punched at least twice from each side. In another arrangement, the bicomponent fibre web may be sandwiched between two thinner air laid webs of the mixture of the of the first and second fibre component. Such example may only require one pass penetration of the needle punch to provide the required bonding of the fibres.

It will be appreciated that the present invention is not limited to the embodiments shown. Several modifications and variations are thus conceivable within the scope of the invention which thus is exclusively defined by the appended claims.

## Claims

1. Method for producing a mineral wool product, said method comprising:
fragmentising (S10) a recycled mineral wool material for obtaining a first fibre component (20) in the form of fragmentised mineral wool material,
mixing (S12) the first fibre component with a second fibre component for obtaining a fibre mixture, wherein the second fibre component has an average fibre length which is greater than an average fibre length of the first fibre component,
subjecting the fibre mixture to needle punching (S14) for mechanically binding the first fibre component and the second fibre component, and
subjecting the fibre mixture to a compression operation (S16).

2. The method according to claim 1, further comprising converting the needle punched and compressed fibre mixture into a panel shaped mineral wool product.

3. The method according to claim 1 or 2, wherein the second fibre component has an average fibre flexibility which is greater than an average fibre flexibility of the first fibre component.

4. The method according to any one of the preceding claims, wherein the step of mixing comprises adding a third fibre component, and mixing the first fibre component and the second fibre component with the third fibre component.

5. The method according to any one of the preceding claims, wherein the second fibre component comprises fire-retardant fibres.

6. The method according to any one of the preceding claims, wherein the second fibre component is at least one of: sheep wool, or metal fibre, para-aramid fibre, novoloid fibres, metallic fibre, polyacrylate or virgin mineral wool.

7. The method according to any one of the preceding claims, wherein the recycled mineral wool is obtained in the form of waste generated during manufacturing, installation and/or demounting after end of life of elements comprising mineral wool.

8. The method according to any one of the preceding claims, wherein the recycled mineral wool is fragmentised to fragments of non-uniform shape and/or having an average size in the range of 10x10x10 mm to 50x50x50 mm.

9. The method according to any one of the preceding claims, wherein the fibres of the second component having an average length of 12-30 mm.

10. The method according to any one of the preceding claims, wherein the needle punching is performed in a range of 50-300 needle punches per square cm.

11. The method according to any one of the preceding claims, wherein the step of subjecting the fibre mixture to a compression operation is performed such that the density of the mineral wool product is in the range of 100-300 kg/m³.

12. The method according to any one of the preceding claims, wherein the step of subjecting the fibre mixture to a compression operation is performed such that the thickness of the mineral wool product is in the range of 20-50 mm.

13. The method according to any one of the preceding claims, further comprising surface milling of the mineral wool product.

14. The method according to any one of the preceding claims, further comprising edge milling of the mineral wool product.

15. The method according to any one of the preceding claims, wherein the fibre mixture is configured such that the mineral wool product obtains a basis weight of 0,1 to 6,0 kg/m² for a calorific value per mass of 0 to 48 MJ/kg and has a total calorific value PCS ≤ 3,0 MJ/kg.
